# EUROPÄISCHE PATENTSCHRIFT

(11) **EP 4 511 265 B1**
(45) Veröffentlichungstag und Bekanntmachung des Hinweises auf die Patenterteilung: **21.10.2026**
(21) Anmeldenummer: 23715750.8
(22) Anmeldetag: 27.03.2023
(51) Int. Cl.: B60W 30/08

(54) **VERFAHREN ZUR PRÜFUNG DER VERLETZUNG EINER GRENZE EINES BEFAHRBAREN BEREICHS DURCH EIN FAHRZEUG UND FAHRERASSISTENZSYSTEM**
METHOD FOR MONITORING WHETHER A VEHICLE HAS CROSSED A BOUNDARY OF A DRIVABLE AREA, AND DRIVER ASSISTANCE SYSTEM
PROCÉDÉ POUR DÉTECTER SI UN VÉHICULE A FRANCHI UNE LIMITE D'UNE ZONE DE CIRCULATION, ET SYSTÈME D'AIDE À LA CONDUITE

(30) Priorität: 19.04.2022 DE 102022203826
(43) Veröffentlichungstag der Anmeldung: 26.02.2025
(73) Patentinhaber: AUMOVIO Autonomous Mobility Germany GmbH, 85057 Ingolstadt (DE)
(72) Erfinder: ZHU, Qiangqiang, 85057 Ingolstadt (DE); SCHRADER, Moritz, 85057 Ingolstadt (DE); HAHN, Stefan, 85057 Ingolstadt (DE)
(74) Vertreter: Aumovio Corporation
(86) Internationale Anmeldenummer: PCT/DE2023/200065
(87) Internationale Veröffentlichungsnummer: WO 2023/202750

(56) Entgegenhaltungen:
- EP-A1- 3 323 697
- EP-B1- 3 344 519
- CN-A- 102 295 004
- US-A1- 2019 370 563

## Beschreibung

Die Erfindung betrifft das Gebiet der Fahrerassistenzsysteme von Fahrzeugen. Insbesondere betrifft die Erfindung ein robustes Verfahren zur Prüfung, ob ein von einem Fahrerassistenzsystem geführtes Fahrzeug beim Fahren entlang einer Trajektorie die Grenzen des zulässigen Freiraums verletzt.

Fahrerassistenzsysteme bei Fahrzeugen sind grundsätzlich bekannt. Zudem sind abstandsbasierte Verfahren bekannt, die prüfen, ob das Fahrzeug, das auf einer Trajektorie bewegt werden soll, entlang der gesamten von der Trajektorie beschriebenen Bewegungsbahn den vorgegebenen Abstand zu den Grenzen des befahrbaren Bereichs einhält. Dies erfolgt unter Berücksichtigung der Fahrzeuggeometrie, d.h. insbesondere der Fläche, die durch Projektion der Fahrzeugkarosseriekontur auf die Fahrbahn entsteht.

Des Weiteren sind Verfahren bekannt, die prüfen, ob zwischen dem Fahrkorridor des Fahrzeugs, d.h. dem Bereich, der bei Bewegung des Fahrzeugs entlang der Trajektorie durch Projektion der Fahrzeugkarosseriekontur auf die Fahrbahn überstrichen wird, und den Grenzlinien des befahrbaren Bereichs ein Schnittpunkt entsteht, d.h. ob der Fahrkorridor eine Grenze des befahrbaren Bereichs kreuzt. Bei bekannten Verfahren muss der Schnittpunkt mit der Grenze des befahrbaren Bereichs berechnet werden.

Problematisch bei den bekannten Verfahren ist, dass diese sehr rechenaufwendig sind, da jeweils Gleichungssysteme gelöst werden müssen, um den Abstand des Fahrzeugs zu den Grenzlinien des befahrbaren Bereichs bzw. den Schnittpunkt eines Abschnitts der Fahrzeugkarosseriekontur mit einer Grenzlinie zu bestimmen. Zudem kann nicht immer garantiert werden, dass die Lösung des Gleichungssystems zu reelen Lösungen führt. Wenn keine reelen Lösungen gefunden werden, muss eine weitergehende Überprüfung erfolgen.

Aus EP 3 344 519 A1 ist eine Vorrichtung zum Rückwärtsfahren einer Gelenkfahrzeugkombination bekannt, die mindestens zwei Fahrzeugeinheiten umfasst, die über mindestens ein Knickgelenk miteinander verbunden sind. Ferner umfasst die Vorrichtung Mittel zum Aufzeichnen und Speichern einer Vielzahl von globalen Positionen einer lokalen Position der Fahrzeugkombination, mindestens einen an der Fahrzeugkombination angebrachten Sensor zum Aufzeichnen von Daten, die eine Vielzahl von Eigenschaften der Umgebung darstellen, und eine Steuereinheit, die angeordnet ist, um einen Satz von globalen Positionen, die aufgezeichnet werden, wenn sich die Fahrzeugkombination vorwärts bewegt, und einen Satz von Daten, die Eigenschaften der Umgebung darstellen, die während der Vorwärtsbewegung aufgezeichnet werden. Ferner werden Fahrzeugsteuerungs-Eingangsdaten zur Steuerung der Fahrzeugkombination während einer Rückwärtsbewegung der Fahrzeugkombination bestimmt, wobei die Steuereinheit angepasst ist, um Eigenschaften der Umgebung, einschließlich Asphalt und Gras, durch eine Signalanalysefunktion in Form einer Bildanalysefunktion zu identifizieren, und wobei die Steuereinheit angeordnet ist, um eine überstrichene Fläche der Fahrzeugkombination auf der Grundlage von mindestens dem Satz von globalen Positionen zu bestimmen.

Die EP 3 323 697 A1 betrifft ein Verfahren zum Planen einer Trajektorie zum autonomen Parken eines Kraftfahrzeugs in einer Parkplatzumgebung mit mehreren Parkplätzen unter weitgehendem Verzicht auf aufwändige Sensorik zu ermöglichen, wobei eine Abmessungen der des Kraftfahrzeugs betreffenden geometrischen Figur durch eine erste Erfassungseinrichtung der Parkplatzumgebung erfasst wird, eine Parkplatzbelegung der mehreren Parkplätze durch eine zweite Erfassungseinrichtung der Parkplatzumgebung erfasst wird, und ein befahrbarer Bereich oder Sperrbereich der Parkplatzumgebung anhand einer Karte der Parkplatzumgebung ermittelt wird und anhand der erfassten Parkplatzbelegung durch ein Steuergerät der Parkplatzumgebung die Trajektorie zum Bewegen der geometrischen Figur auf einen freien Parkplatz repräsentierenden Bereich der Karte durch das Steuergerät der Parkplatzumgebung geplant wird.

Ferner offenbart US 2019/0370563 A1 ein Verfahren zur Erkennung von erhöhten Fahrbahnmarkierungen in der Umgebung eines Fahrzeugs durch ein Kamerasystem. Das Verfahren umfasst das Aufnehmen mindestens eines Bildes von mindestens einem Teil der Umgebung durch eine Kamera des Kamerasystems und das Analysieren des Bildes und das Bestimmen, ob mindestens eine erste Fahrbahnmarkierung in der Umgebung vorhanden ist, in Abhängigkeit von einem Ergebnis der Analyse des Bildes. Das Verfahren umfasst ferner das Erfassen mindestens eines weiteren Bildes von einem zweiten Teil der Umgebung durch eine weitere Kamera des Kamerasystems und das Analysieren des mindestens weiteren Bildes und das Bestimmen, ob die mindestens eine erste oder mindestens eine zweite Fahrbahnmarkierung in der Umgebung vorhanden ist, in Abhängigkeit von einem Ergebnis der Analyse.

Ausgehend hiervon ist es Aufgabe der Erfindung, ein Verfahren anzugeben, das eine zuverlässige Prüfung der Verletzung einer Grenze eines befahrbaren Bereichs mit geringem Rechenaufwand ermöglicht.

Die Aufgabe wird durch ein Verfahren mit den Merkmalen des unabhängigen Patentanspruchs 1 gelöst. Bevorzugte Ausführungsformen sind Gegenstand der Unteransprüche. Ein Fahrerassistenzsystem, das dazu ausgebildet ist, die Verletzung einer Grenze eines befahrbaren Bereichs zu prüfen, ist Gegenstand des nebengeordneten Patentanspruchs 11.

Gemäß einem ersten Aspekt wird ein Verfahren zur Prüfung der Verletzung einer Grenze eines befahrbaren Bereichs durch ein Fahrzeug offenbart. Das Fahrzeug weist ein Fahrerassistenzsystem auf, das dazu ausgebildet ist, das Fahrzeug entlang einer Trajektorie automatisiert oder teilautomatisiert zu bewegen. Zudem ist das Fahrerassistenzsystem dazu konfiguriert, das Prüfverfahren mit den folgenden Schritten zu vollziehen:
Zunächst werden Informationen zu zumindest einer Grenzlinie des befahrbaren Bereichs empfangen. Die Informationen können von einer Umgebungserfassungseinheit des Fahrzeugs bereitgestellt werden, die ein Umfeldmodell der Umgebung um das Fahrzeug herum erstellt. Die Grenzlinie kann beispielsweise eine Grenze im Freiraum festlegen, die insbesondere eine Fahrspur definiert, auf der das Fahrzeug bewegt werden soll. Alternativ kann die Grenzlinie ein Umgebungsobjekt im Umfeld des Fahrzeugs charakterisieren.

Zudem werden Informationen zu einem Fahrkorridor des Fahrzeugs empfangen. Der Fahrkorridor ist der Bereich, der beim Durchfahren der Trajektorie durch eine Projektion der Fahrzeugkarosseriekontur auf die Fahrbahn überstrichen wird. In anderen Worten ist der Fahrkorridor ein schlauchartiger Bereich zumindest mit einer Breite gleich der Fahrzeugbreite (im Falle des Einbeziehens eines Sicherheitspuffers auch breiter).

Vorzugsweise ist die Grenzlinie durch eine Vielzahl von Punkten, d.h. durch einen Linienzug aus mehreren Geraden definiert, wobei sich die Geraden jeweils zwischen zwei benachbarten Punkten erstrecken. Alternativ kann die Grenzlinie auch durch eine stetige Linie gebildet sein.

Es wird ein erster und ein zweiter Punkt auf der Grenzlinie des befahrbaren Bereichs selektiert. Der erste Punkt ist dabei in Fahrtrichtung des Fahrzeugs hinter dem zweiten Punkt gelegen. Durch die Punkte wird damit ein Abschnitt der Grenzlinie definiert, bezogen auf den die Prüfung erfolgt, ob eine Verletzung der Grenzlinie beim Durchfahren der Trajektorie vorliegt oder nicht.

Zudem wird ein dritter Punkt festgelegt, der auf dem Rand des Fahrkorridors des Fahrzeugs liegt. Der Fahrkorridor des Fahrzeugs kann entweder durch stetige Linien definiert sein oder aber durch eine Vielzahl von an unterschiedlichen Positionen entlang der Trajektorie positionierten Fahrzeugkarosseriekonturen. Die Fahrzeugkarosseriekontur kann beispielsweise durch ein Polygon, insbesondere durch ein Rechteck gebildet sein, das die Fahrzeugkarosseriekontur bei Draufsicht auf das Fahrzeug von oben zumindest näherungsweise beschreibt. Die Fahrzeugkarosseriekontur kann größer gewählt sein als die tatsächliche Fahrzeugkarosseriekontur, um einen Sicherheitspuffer zu erhalten.

Anschließend wird die Lage des dritten Punkts relativ zu der Linie zwischen dem ersten und zweiten Punkt ermittelt, und zwar durch Prüfen, ob beim Durchlaufen eines Polygonlinienzuges, der ausgehend vom ersten Punkt über den zweiten Punkt zum dritten Punkt gebildet wird, eine erste Rotationsrichtung im Uhrzeigersinn oder entgegen dem Uhrzeigersinn vorliegt. In anderen Worten werden die drei Punkte, von denen zwei auf der Grenzlinie liegen und einer einen Punkt des Fahrkorridors des Fahrzeugs angibt, durch einen Linienzug verbunden. Dieser Linienzug kann offen sein, d.h. er kann am dritten Punkt enden, oder er kann geschlossen sein, so dass sich ein Dreieck ergibt. Dann wird die Rotationsrichtung geprüft, die sich ergibt, wenn ein Durchlauf des Linienzugs derart erfolgt, dass die Strecke zwischen den beiden Punkten auf der Grenzlinie des befahrbaren Bereichs in Fahrtrichtung durchlaufen wird. Zusätzlich wird geprüft, ob die ersten bis dritten Punkte kollinear sind, d.h. auf einer Geraden liegen.

Zudem wird zumindest ein vierter Punkt festgelegt, der auf dem Rand des Fahrkorridors des Fahrzeugs liegt und der von dem dritten Punkt verschieden ist.

Anschließend wird die Lage dieses vierten Punkts relativ zu der Linie zwischen dem ersten und zweiten Punkt ermittelt, und zwar durch Prüfen, ob beim Durchlaufen eines Linienzuges, der ausgehend vom ersten Punkt über den zweiten Punkt zum vierten Punkt gebildet wird, eine zweite Rotationsrichtung im Uhrzeigersinn oder entgegen dem Uhrzeigersinn vorliegt. In anderen Worten werden die drei Punkte, von denen zwei auf der Grenzlinie liegen und einer einen weiteren Punkt des Fahrkorridors des Fahrzeugs definiert, durch einen Linienzug verbunden. Dieser Linienzug kann offen sein, d.h. er kann am vierten Punkt enden, oder er kann geschlossen sein, so dass sich ein Dreieck ergibt. Dann wird die Rotationsrichtung geprüft, die sich ergibt, wenn ein Durchlauf des Linienzugs derart erfolgt, dass die Strecke zwischen den beiden Punkten auf der Grenzlinie des befahrbaren Bereichs in Fahrtrichtung durchlaufen wird. Alternativ oder zusätzlich kann geprüft werden, ob der erste, zweite und vierte Punkt kollinear sind, d.h. auf einer Geraden liegen.

Zuletzt wird geprüft, ob eine Verletzung der Grenze des befahrbaren Bereichs vorliegt. Dies erfolgt durch Vergleichen der ersten und zweiten Rotationsrichtung. Wenn diese identisch sind, ist dies ein Indiz dafür, dass keine Verletzung der Grenze des befahrbaren Bereichs vorliegt. Unterschiedliche Rotationsrichtungen hingegen sind ein Indiz für eine Verletzung der Grenze des befahrbaren Bereichs. Zusätzlich werden die Ergebnisse der Kollinearitätsprüfung verwendet, um festzustellen, ob eine Verletzung der Grenze des befahrbaren Bereichs vorliegt.

Das Verfahren hat den technischen Vorteil, dass durch das auf der Rotationsrichtung basierende Prüfungsverfahren eine technisch einfache Prüfung mit geringem Rechenaufwand möglich wird, da das Prüfungsverfahren punktebasiert ist, so dass recheneffiziente Methoden der Vektorrechnung eingesetzt werden können und damit ein Lösen eines rechenaufwendigen Gleichungssystems nicht nötig ist. Zudem ist es mittels des Prüfungsverfahrens möglich, festzustellen, ob der befahrbare Bereich bereits vollständig verlassen wurde, was die Sicherheit des Prüfverfahrens verbessert.

Gemäß einem Ausführungsbeispiel ist der dritte und vierte Punkt jeweils ein Eckpunkt eines Polygons, das die Fahrzeugkarosseriekontur nachbildet. Der dritte und vierte Punkt bezieht sich auf eine gemeinsame Seitenlinie der Fahrzeugkarosseriekontur. Der dritte und vierte Punkt ist jeweils ein Eckpunkt der rechten oder linken Seitenlinie der Fahrzeugkarosseriekontur. Dadurch kann leicht geprüft werden, ob die Seitenlinie der Fahrzeugkarosseriekontur die Grenzlinie des befahrbaren Bereichs kreuzt. Aus ggf. vorhandenen weiteren Informationen, beispielsweise ob es sich um eine linke Ecke oder eine rechte Ecke der Fahrzeugkarosseriekontur handelt oder ob der erste und zweite Punkt auf einer Grenzlinie links oder rechts vom Fahrzeug liegen, können weitere relevante Rückschlüsse gezogen werden, beispielsweise ob das Fahrzeug insgesamt außerhalb dem befahrbaren Bereich liegt.

Gemäß einem Ausführungsbeispiel wird beim Prüfen der Verletzung der Grenze des befahrbaren Bereichs ermittelt, ob die erste und zweite Rotationsrichtung gleich oder unterschiedlich sind. Wenn die erste und zweite Rotationsrichtung gleich sind, kann daraus gefolgert werden, dass der dritte und vierte Punkt auf der gleichen Seite der Grenzlinie liegen. Bei unterschiedlichen Rotationsrichtungen kann gefolgert werden, dass der dritte und vierte Punkt auf unterschiedlichen Seiten der Grenzlinie liegen und damit das Fahrzeug beim Durchfahren der Trajektorie in einen nicht zum Befahren vorgesehenen Bereich gelangen wird bzw. eine Kollision mit einem Umgebungsobjekt droht.

Gemäß einem Ausführungsbeispiel wird die zumindest eine Grenzlinie des befahrbaren Bereichs durch mehrere zueinander beabstandete Punkte approximiert. Die Punktepaare der Grenzlinie werden zeitlich nacheinander als erste und zweite Punkte ausgewählt und für die Ermittlung der ersten und zweiten Rotationsrichtung und die Prüfung, ob eine Verletzung der Grenze des befahrbaren Bereichs vorliegt, verwendet. Dadurch kann allein basierend auf Punktepaaren der Grenzlinie ohne ein Gleichungssystem iterativ die Prüfung der Verletzung des befahrbaren Bereichs vollzogen werden.

Gemäß einem Ausführungsbeispiel weist der befahrbare Bereich eine linke und eine rechte Grenzlinie auf, die zueinander beabstandet sind und eine Fahrspur definieren. Die Fahrzeugkarosseriekontur wird durch ein Rechteck mit einem Paar von linken Ecken und einem Paar von rechten Ecken approximiert. Für das Paar von linken Ecken wird eine erste und zweite Rotationsrichtung ermittelt, d.h. für eine der linken Ecken die erste Rotationsrichtung und für die andere linke Ecke die zweite Rotationsrichtung. Basierend auf der ersten und zweiten Rotationsrichtung wird geprüft, ob das Fahrzeug die linke Grenzlinie des befahrbaren Bereichs verletzt. Dadurch kann das Verfahren vorteilhaft und mit reduziertem Rechenaufwand auf die Einhaltung der linken Grenzlinie einer vorgegebenen Fahrspur angewandt werden.

Gemäß einem Ausführungsbeispiel weist der befahrbare Bereich eine linke und eine rechte Grenzlinie auf, die zueinander beabstandet sind und eine Fahrspur definieren. Die Fahrzeugkarosseriekontur wird durch ein Rechteck mit einem Paar von linken Ecken und einem Paar von rechten Ecken approximiert. Für das Paar von rechten Ecken wird eine erste und zweite Rotationsrichtung ermittelt, d.h. für eine der rechten Ecken die erste Rotationsrichtung und für die andere rechte Ecke die zweite Rotationsrichtung. Basierend auf der ersten und zweiten Rotationsrichtung wird geprüft, ob das Fahrzeug die rechte Grenzlinie des befahrbaren Bereichs verletzt. Dadurch kann das Verfahren vorteilhaft und mit reduziertem Rechenaufwand auf die Einhaltung der rechten Grenzlinie einer vorgegebenen Fahrspur angewandt werden.

Gemäß einem Ausführungsbeispiel weist der befahrbare Bereich eine linke und eine rechte Grenzlinie auf, die zueinander beabstandet sind und eine Fahrspur definieren. Die Fahrzeugkarosseriekontur wird durch ein Rechteck mit zwei linken Ecken und zwei rechten Ecken approximiert. Es wird die Lage zumindest der zwei linken Ecken relativ zur Linie zwischen dem ersten und zweiten Punkt, die auf der linken Grenzlinie liegen, geprüft. Dabei wird für die beiden linken Ecken jeweils eine Rotationsrichtungsbestimmung durchgeführt, und zwar indem für jede Ecke beim Durchlaufen eines Linienzuges, der ausgehend vom ersten Punkt über den zweiten Punkt zur jeweiligen Ecke der Fahrzeugkarosseriekontur gebildet wird, eine Rotationsrichtung bestimmt wird, so dass zumindest zwei Rotationsrichtungen ermittelt werden. Anschließend wird geprüft, ob die Rotationsrichtungen im Uhrzeigersinn orientiert sind. Dadurch kann ermittelt werden, ob sich das Fahrzeug rechts von der linken Grenzlinie befindet. Falls notwendig kann die Rotationsrichtungsbestimmung und die Rotationsrichtungsprüfung für mehr als zwei Ecken, insbesondere für alle vier Ecken des Rechtecks, das die Fahrzeugkarosseriekontur nachbildet, durchgeführt werden.

Gemäß einem Ausführungsbeispiel weist der befahrbare Bereich eine linke und eine rechte Grenzlinie auf, die zueinander beabstandet sind und eine Fahrspur definieren. Die Fahrzeugkarosseriekontur wird durch ein Rechteck mit zwei linken Ecken und zwei rechten Ecken approximiert. Es wird die Lage zumindest der zwei rechten Ecken relativ zur Linie zwischen dem ersten und zweiten Punkt, die auf der rechten Grenzlinie liegen, geprüft. Dabei wird für die beiden rechten Ecken jeweils eine Rotationsrichtungsbestimmung durchgeführt, und zwar indem für jede Ecke beim Durchlaufen eines Linienzuges, der ausgehend vom ersten Punkt über den zweiten Punkt zur jeweiligen Ecke zurückgebildet wird, eine Rotationsrichtung bestimmt wird, so dass zumindest zwei Rotationsrichtungen ermittelt werden. Anschließend wird geprüft, ob die Rotationsrichtungen gegen den Uhrzeigersinn orientiert sind. Dadurch kann ermittelt werden, ob sich das Fahrzeug links von der rechten Grenzlinie befindet.

Gemäß einem Ausführungsbeispiel bezieht sich die Grenzlinie des befahrbaren Bereichs auf eine Grenzlinie eines örtlich begrenzten Umgebungsobjekts im Umgebungsbereich des Fahrzeugs. Das Umgebungsobjekt wird durch einen Begrenzungsrahmen beschrieben. Der erste und zweite Punkt definiert eine Linie des Begrenzungsrahmens, die sich auf eine dem Fahrzeug zugewandte Seite des Umgebungsobjekts bezieht. Dadurch kann geprüft werden, ob beim Durchfahren der Trajektorie eine Kollision des Fahrzeugs mit dem Umgebungsobjekt auftritt.

Gemäß einem Ausführungsbeispiel wird die Fahrzeugkarosseriekontur durch ein Rechteck mit vier Ecken approximiert wird. Das Umgebungsobjekt wird durch einen rechteckförmigen Begrenzungsrahmen mit vier Ecken approximiert. Für jede Linie des rechteckförmigen Begrenzungsrahmens wird jeweils die Lage sämtlicher Ecken des Rechtecks der Fahrzeugkarosseriekontur relativ zu der jeweiligen Linie bestimmt, und zwar jeweils durch Bestimmen der Rotationsrichtung beim Durchlaufen des Polygonzugs zwischen den Endpunkten der jeweiligen Linie des rechteckförmigen Begrenzungsrahmens und der jeweiligen Ecke des Rechtecks der Fahrzeugkarosseriekontur. Dadurch werden eine Vielzahl von Rotationsrichtungsinformationen erhalten. Nach dem Bestimmen der Rotationsrichtungen wird geprüft, ob alle Rotationsrichtungen gleich sind. Dadurch ist es möglich, zu prüfen, ob eine Kollision mit dem Umgebungsobjekt in longitudinaler oder lateraler Richtung vorliegt.

Gemäß einem weiteren Aspekt betrifft die Erfindung ein Fahrerassistenzsystem, das zur Prüfung der Verletzung einer Grenze eines befahrbaren Bereichs durch ein Fahrzeug ausgebildet ist. Das Fahrerassistenzsystem umfasst mehrere um ein Fahrzeug herum verteilt angeordnete Sensoren und eine Recheneinheit zur Verarbeitung der von den Sensoren bereitgestellten Informationen. Die Recheneinheit ist dazu konfiguriert, die folgenden Schritte zu vollziehen:
- Empfangen von Informationen zu zumindest einer Grenzlinie des befahrbaren Bereichs;
- Empfangen von Informationen zu einem Fahrkorridor des Fahrzeugs, wobei der Fahrkorridor der Bereich ist, der beim Durchfahren der Trajektorie durch eine Projektion der Fahrzeugkarosseriekontur auf die Fahrbahn überstrichen wird;
- Selektieren eines ersten und eines zweiten Punkts auf der Grenzlinie des befahrbaren Bereichs, wobei der erste Punkt in Fahrtrichtung des Fahrzeugs hinter dem zweiten Punkt liegt;
- Festlegen eines dritten Punkts, der auf dem Rand des Fahrkorridors des Fahrzeugs liegt;
- Ermitteln der Lage des dritten Punkts relativ zu der Linie zwischen dem ersten und zweiten Punkt durch Prüfen, ob beim Durchlaufen eines Polygonlinienzuges, der ausgehend vom ersten Punkt über den zweiten Punkt zum dritten Punkt gebildet wird, eine erste Rotationsrichtung im Uhrzeigersinn oder entgegen dem Uhrzeigersinn oder eine Kollinearität des ersten, zweiten und dritten Punkts vorliegen;
- Festlegen zumindest eines vierten Punkts, der auf dem Rand des Fahrkorridors des Fahrzeugs liegt und von dem dritten Punkt verschieden ist;
- Ermitteln der Lage des vierten Punkts relativ zu der Linie zwischen dem ersten und zweiten Punkt durch Prüfen, ob beim Durchlaufen eines Polygonlinienzuges, der ausgehend vom ersten Punkt über den zweiten Punkt zum vierten Punkt gebildet wird, eine zweite Rotationsrichtung im Uhrzeigersinn oder entgegen dem Uhrzeigersinn oder eine Kollinearität des ersten, zweiten und vierten Punkts vorliegen;
- Prüfen der Verletzung der Grenze des befahrbaren Bereichs durch Vergleichen der ersten und zweiten Rotationsrichtung und den Ergebnissen der Prüfung auf Kollinearität.

Die Ausdrücke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
- Fig. 1: beispielhaft eine schematische Draufsichtdarstellung eines Fahrzeugs, das ein Fahrerassistenzsystem mit mehreren Sensoren und einer Recheneinheit aufweist;
- Fig. 2: beispielhaft unterschiedliche Anordnungen von Punkten A, B, C, die bei vorgegebener Umlaufrichtung der Punkte die sich daraus ergebende Rotationsrichtung verdeutlicht;
- Fig. 3: beispielhaft die Bewegung eines Fahrzeugs entlang einer Trajektorie durch ein Paar von Grenzlinien, die eine Fahrspur definieren und die beispielhafte Anwendung des Rotationsrichtungsverfahrens zur Prüfung der Verletzung der Grenzlinien der Fahrspur; und
- Fig. 4: beispielhaft ein die Bewegung eines Fahrzeugs basierend auf einer Trajektorie entlang einer Fahrspur, wobei eine Verletzung der linken Grenzlinie der Fahrspur auftritt;
- Fig. 5: beispielhaft die Bewegung eines Fahrzeugs basierend auf einer Trajektorie durch eine Fahrgasse, die durch mehrere Umgebungsobjekte seitlich begrenzt ist, wobei beim Fahren entlang Trajektorie eine Kollision mit einem Umgebungsobjekt auftritt; und
- Fig. 6: ein Ablaufdiagramm, das die Schritte des Verfahrens zur Prüfung der Verletzung einer Grenze eines befahrbaren Bereichs verdeutlicht.

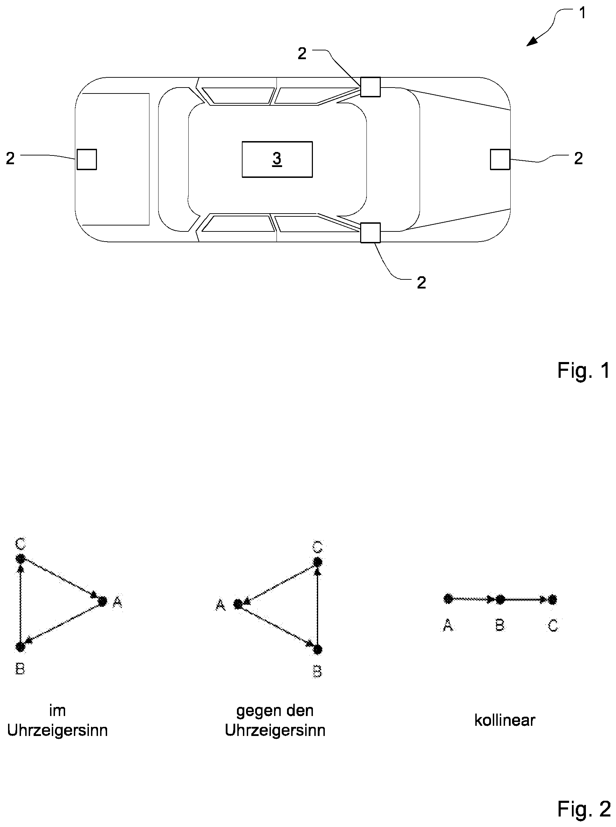

Figur 1 zeigt beispielhaft und schematisch ein Fahrzeug 1, das ein Fahrerassistenzsystem zur Durchführung von automatischen oder teilautomatischen Fahrvorgängen aufweist. Das Fahrerassistenzsystem kann insbesondere dazu ausgebildet sein, von dem Fahrzeug 1 automatisiert bzw. teilautomatisiert befahrbare Bereiche zu erkennen und eine Steuerung des Fahrzeugs 1 derart zu vollziehen, dass das Fahrzeug keine Grenzen des befahrbaren Bereichs verletzt. Der befahrbare Bereich kann beispielsweise eine Fahrspur sein, die eine linke und eine rechte Grenzlinie aufweist. Alternativ kann der befahrbare Bereich durch ein oder mehrere Umgebungsobjekte eingeschränkt sein, mit denen eine Kollision vermieden werden soll.

Das Fahrzeug 1 weist mehrere Sensoren 2 auf, mittels denen der Umgebungsbereich des Fahrzeugs 1 erfassbar ist. Die Sensoren 2 sind mit einer Recheneinheit 3 des Fahrerassistenzsystems gekoppelt, die die Sensorinformationen verarbeitet und Informationen zu zumindest einer Grenzlinie des befahrbaren Bereichs bereitstellt. Durch diese Umgebungserfassung ist das Fahrerassistenzsystem in der Lage, örtliche Bereiche festzulegen, auf denen das Fahrzeug 1 kollisionsfrei geführt werden kann.

Das Fahrerassistenzsystem ist zudem dazu ausgebildet, eine Trajektorie zu bestimmen, auf der das Fahrzeug 1 beim autonom bzw. teilautonom durchgeführten Fahrvorgang bewegt wird. Beim Durchfahren der Trajektorie wird das Fahrzeug auf einem Fahrkorridor bewegt. Der Fahrkorridor ergibt sich aus dem Bereich, der beim Bewegen des Fahrzeugs von der Fahrzeugkarosserie überstrichen bzw. zeitweise belegt wird. Das Fahrzeugs weist eine umfangsseitige Fahrzeugkarosseriekontur auf, die sich beispielsweise bei Draufsicht auf das Fahrzeug 1 von oben, d.h. aus der Vogelperspektive ergibt. Die Projektion dieser Fahrzeugkarosseriekontur senkrecht nach unten auf die Fahrbahn definiert den von dem Fahrzeug 1 belegten Bereich der Fahrbahn. Dieser Bereich muss zum Durchfahren zwingend frei sein, um das Fahrzeug 1 kollisionsfrei bewegen zu können. Der Fahrkorridor ist damit schlauchartig und weist eine Breite zumindest gleich der Breite der Fahrzeugkarosseriekontur auf. Der Fahrkorridor kann auch breiter als die Fahrzeugbreite ausgebildet sein, um die Sicherheit des Verfahrens zu erhöhen.

Um feststellen zu können, ob das Fahrzeug 1 eine Grenze des befahrbaren Bereichs verletzt, kann ein rotationsrichtungsbasiertes Prüfverfahren angewendet werden.

Fig. 2 zeigt drei Möglichkeiten wie ein Triple von Punkten A, B und C angeordnet sein kann. Beispielsweise bildet die Linie zwischen den Punkten B und C einen Abschnitt einer Grenzlinie des befahrbaren Bereichs. Der Punkt A kann beispielsweise ein Eckpunkt der Fahrzeugkarosseriekontur des Fahrzeugs 1 sein. Die Punkte A, B und C spannen ein Dreieck auf, im Allgemeinen ein Polygon. Bei dem Durchlaufen des Linienzuges entlang der Punkte in einer vorgegebenen Reihenfolge, beispielsweise vom Punkt B über den Punkt C zum Punkt A kann eine Lageinformation des Punkts A relativ zur Linie zwischen den Punkten B und C ermittelt werden. Ergibt sich beim Durchlaufen des Linienzugs eine Rotationsrichtung im Uhrzeigersinn, kann rückgeschlossen werden, dass der Punkt A rechts von der Linie BC liegt. Im umgekehrten Fall kann rückgeschlossen werden, dass der Punkt A links von der Linie BC liegt, wenn sich beim Durchlaufen des Linienzugs eine Rotationsrichtung entgegen dem Uhrzeigersinn ergibt (mittlere Darstellung der Fig. 2). Der dritte Fall ist der kollineare Fall, bei dem alle drei Punkte A, B, C auf einer Gerade liegen, wie dies in der rechten Darstellung in Fig. 2 gezeigt ist.

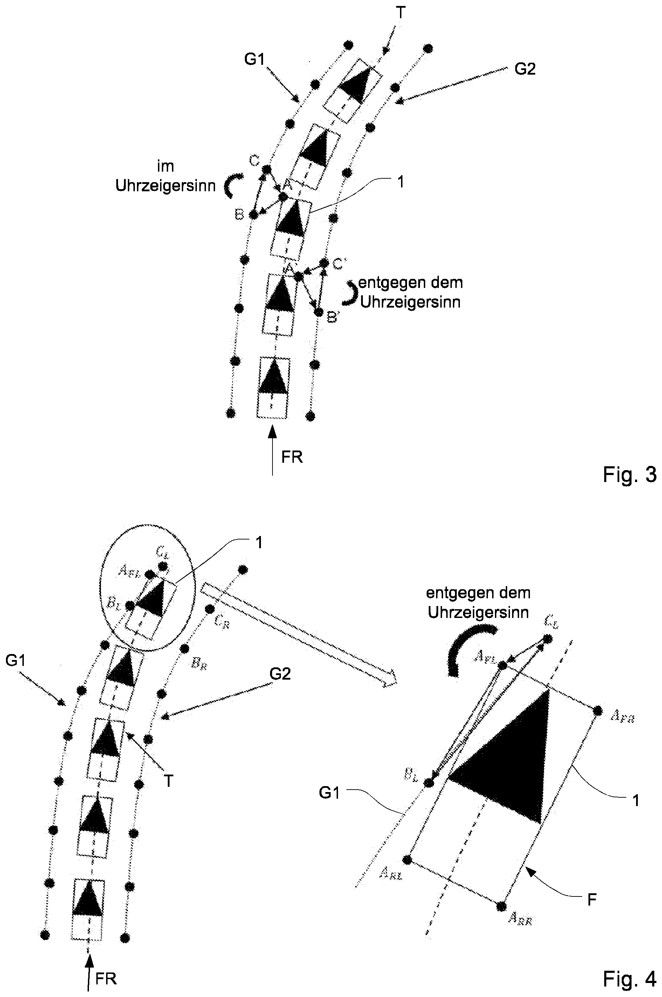

Fig. 3 zeigt ein Anwendungsbeispiel des beschriebenen Verfahrens, bei dem das Fahrzeug 1 auf einer Trajektorie T in Fahrtrichtung FR auf einer Fahrspur bewegt wird, die durch eine linke Grenzlinie G1 und eine rechte Grenzlinie G2 definiert wird. Die Grenzlinien G1, G2 können durch diskrete Punkte nachgebildet werden, die zueinander beabstandet sind. In dem Ausführungsbeispiel gemäß Fig. 3 sind die Punkte B und C zwei Punkte der linken Grenzlinie G1 und die Punkte B' und C' sind zwei Punkte der rechten Grenzlinie G2.

Die Fahrzeugkarosseriekontur des Fahrzeugs 1 ist durch ein Rechteck nachgebildet. Die Größe des Rechtecks ist derart gewählt, dass alle Bereiche des Fahrzeugs 1 innerhalb dieser Fahrzeugkarosseriekontur liegen, beispielsweise auch die Seitenspiegel des Fahrzeugs 1.

Um sicherzustellen, dass das Fahrzeug 1 kollisionsfrei auf der Trajektorie T bewegt werden kann, muss geprüft werden, dass der Fahrkorridor des Fahrzeugs 1, der sich aus der Bewegung der Fahrzeugkarosseriekontur entlang der Trajektorie T ergibt, keinen Schnittpunkt mit der den Grenzlinien G1, G2 aufweist. Der Fahrkorridor des Fahrzeugs 1 kann insbesondere ein schlauchartiger Bereich sein, der innerhalb der Grenzlinien G1, G2 liegen muss, um die Kollisionsfreiheit der Trajektorie T zu garantieren.

Die Prüfung der Kollisionsfreiheit der Trajektorie T kann iterativ basierend auf diskreten Fahrzeugpositionen des Fahrzeugs 1 erfolgen, wie dies in Fig. 3 durch die Vielzahl von Rechtecken angedeutet ist, die das Fahrzeug 1 repräsentieren.

An einer definierten Fahrzeugposition ist zu prüfen, ob die linke Fahrzeugkonturlinie sich rechts von der linken Grenzlinie G1 und sich die rechte Fahrzeugkonturlinie links von der rechten Grenzlinie G2 befindet. Diese Prüfung kann im gezeigten Ausführungsbeispiel anhand der vorderen linken und hinteren linken Ecke bzw. der vorderen rechten und der hinteren rechten Ecke erfolgen. Mehr im Detail muss geprüft werden, ob die vordere linke und hintere linke Ecke in Bezug auf die linke Grenzlinie G1 die gleiche Lage haben, d.h. beide rechts von der linken Grenzlinie G1 liegen. Analoges gilt für die vordere rechte und hintere rechte Ecke in Bezug auf die rechte Grenzlinie G2. Auch diese beiden Ecken müssen relativ zur rechten Grenzlinie G2 die gleiche Lage haben, d.h. beide müssen links von der rechten Grenzlinie G2 liegen.

Bei dieser Prüfung wird beispielsweise ein Punktepaar der linken Grenzlinie G1 der Fahrspur bestimmt, das in der Nähe der linken Fahrzeugkonturlinie liegt. Dies sind im gezeigten Ausführungsbeispiel die Punkte B und C. Die vordere linke Ecke des Fahrzeugs 1 ist mit dem Punkt A bezeichnet. Für den Linienzug aus der Punktefolge B-C-A ergibt sich eine Rotationsrichtung im Uhrzeigersinn.

Die gleiche Prüfung wird nun für die hintere linke Ecke des Fahrzeugs 1 relativ zu den Punkten B und C vollzogen. Wird der Polygonlinienzug von dem Punkt B nach C über die hintere linke Ecke zurück zu B durchlaufen, ergibt sich ebenfalls eine Rotationsrichtung im Uhrzeigersinn. Damit ergibt die Prüfung, dass beide Eckpunkte der linken Fahrzeugkonturlinie auf derselben Seite der linken Grenzlinie G1 liegen, d.h. die linke Fahrzeugkonturlinie nicht die linke Grenzlinie G1 kreuzt, d.h. Kollisionsfreiheit mit der linken Grenzlinie G1 vorliegt. Zudem kann festgestellt werden, dass beide Eckpunkte der linken Fahrzeugkonturlinie rechts von der linken Grenzlinie G1 liegen.

Analoge Prüfung erfolgt bezüglich der beiden Eckpunkte der rechten Fahrzeugkonturlinie relativ zur rechten Grenzlinie G2.

Wie in Fig. 3 gezeigt, ist auch die rechte Grenzlinie G2 durch eine Vielzahl von Punkten repräsentiert, wobei die Punkte B' und C' eine Linie definieren, die ein Teilstück der rechten Grenzlinie G2 bildet. Um feststellen zu können, ob das Fahrzeug 1 beim Durchfahren des Fahrkorridors diese rechte Grenzlinie G2 nicht durchquert, wird der vorbeschriebene Algorithmus in analoger Weise für die Eckpunkte der rechten Fahrzeugkonturlinie vollzogen. So wird für die vordere rechte Ecke der Fahrzeugkonturlinie A' und des sich daraus ergebenden Linienzug B'-C'-A' die Rotationsrichtung bestimmt, die sich beim Durchlaufen des Polygonlinienzugs mit der vorbeschriebenen Laufrichtung ergibt. Diese ist im gezeigten Ausführungsbeispiel entgegen dem Uhrzeigersinn.

Eine ähnliche Prüfung wird nun für die hintere rechte Ecke des Fahrzeugs 1 relativ zu den Punkten B' und C' vollzogen. Wird der Polygonlinienzug von dem Punkt B' nach C' über die hintere rechte Ecke des Fahrzeugs 1 zurück zu B' durchlaufen, ergibt sich ebenfalls eine Rotationsrichtung entgegen dem Uhrzeigersinn. Damit ergibt die Prüfung, dass beide Eckpunkte der rechten Fahrzeugkonturlinie auf derselben Seite der rechten Grenzlinie G2 liegen, d.h. die rechte Fahrzeugkonturlinie nicht die rechte Grenzlinie G2 kreuzt und damit Kollisionsfreiheit mit der rechten Grenzlinie G2 vorliegt. Zudem kann festgestellt werden, dass beide Eckpunkte der rechten Fahrzeugkonturlinie links von der rechten Grenzlinie G2 liegen.

Die vorbeschriebenen Prüfschritte werden vorzugsweise iterativ für mehrere Fahrzeugpositionen entlang des Fahrkorridors und für unterschiedliche Abschnitte (definiert durch Paare von Punkten B-C bzw. B'-C') der Grenzlinien G1 und G2 vollzogen, um die Kollisionsfreiheit der Trajektorie T zu garantieren.

Fig. 4 zeigt ein Beispiel, bei dem die Trajektorie T derart bestimmt ist, dass der Fahrkorridor des Fahrzeugs 1 in dem mit dem Oval gekennzeichneten Bereich die linke Grenzlinie G1 kreuzt und dadurch eine Verletzung einer Grenze des befahrbaren Bereichs auftritt.

Der Abschnitt der Grenzlinie G1 im Bereich des Fahrzeugs 1 wird durch die Punkte B_{L} und C_{L} definiert. Die vordere linke Ecke des Fahrzeugs 1 ist als Punkt A_{FL} bezeichnet. Für den Linienzug aus der Punktefolge B_{L}- C_{L}-A_{FL} ergibt sich eine Rotationsrichtung entgegen dem Uhrzeigersinn. Bei Anwendung des vorgeschlagenen Verfahrens auf die hintere linke Ecke des Fahrzeugs 1, die als Punkt A_{RL} bezeichnet ist, in Bezug auf die Grenzlinie G1, die wiederum durch die Punkte B_{L} und C_{L} definiert wird, ergibt sich beim Durchlaufen des Linienzuges entlang der Punkte B_{L}- C_{L}-A_{RL} eine Rotationsrichtung im Uhrzeigersinn. Da die Rotationsrichtungen für die vordere und hintere Ecke unterschiedlich sind, kann durch das vorgeschlagene Verfahren eine Verletzung der Grenzlinie G1 erkannt werden.

Um zu erkennen, dass das Fahrzeug 1 nicht völlig außerhalb des befahrbaren Bereichs liegt, kann es sinnvoll sein, in jedem Zyklus oder in größeren Zeitintervallen zu überprüfen, wie die Lage der linken bzw. rechten Eckpaare der Fahrzeugkonturlinie relativ zu zumindest einer Grenzlinie G1, G2 liegen. Für den Fall, dass sich beispielsweise für die linken Ecken der Fahrzeugkonturlinie des Fahrzeugs 1 relativ zu der Linie, die durch die Punkte B_{L} und C_{L} festgelegt wird, eine Rotationsrichtung entgegen dem Uhrzeigersinn ergibt und diese Rotationsrichtung indiziert, dass die linken Ecken der Fahrzeugkarosseriekontur links von der linken Grenzlinie G1 liegen, kann daraus gefolgert werden, dass sich das Fahrzeug 1 an diesem Punkt der Trajektorie T bereits außerhalb des befahrbaren Bereichs befindet und damit eine Verletzung der Grenze des befahrbaren Bereichs vorliegt.

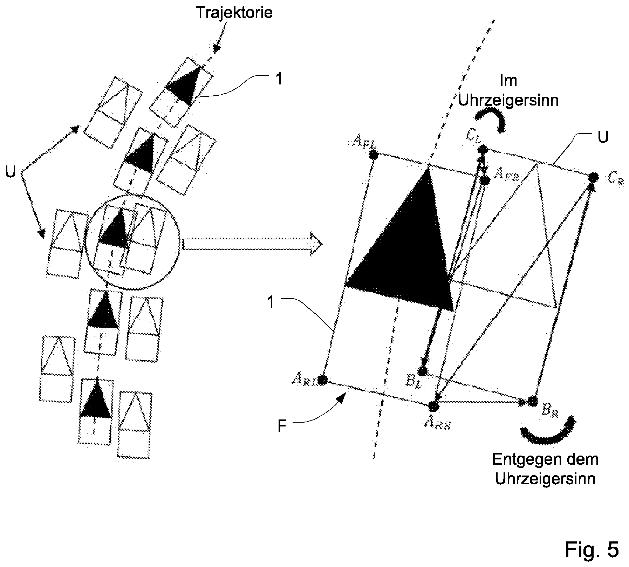

Fig. 5 zeigt ein Ausführungsbeispiel, bei dem die Grenze des befahrbaren Bereichs nicht durch eine Grenzlinie im freien Raum definiert wird, sondern der befahrbare Bereich durch Umgebungsobjekte U mit einer begrenzten örtlichen Erstreckung lateral begrenzt ist. Das Verfahren kann damit direkt dazu verwendet werden, eine Kollision mit den Umgebungsobjekten U zu verhindern.

Das Umgebungsobjekt U kann durch eine Umgebungsobjekt-Kontur approximiert werden, die beispielsweise ein Polygon mit mehreren Eckpunkten, insbesondere als Rechteck geformt ist. Um sicherzustellen, dass keine Kollision des Fahrzeugs 1 mit dem Umgebungsobjekt U erfolgt, muss eine Kollisionsfreiheit in lateraler Richtung (d.h. zur linken bzw. rechten Grenzlinie der Umgebungsobjekt-Kontur) und in longitudinaler Richtung (d.h. zur vorderen bzw. hinteren Grenzlinie der Umgebungsobjekt-Kontur) vorliegen.

In Fig. 5 sind die Ecken der Fahrzeugkarosseriekontur des Fahrzeugs 1 durch die Punkte A_{FL}, A_{RL}, A_{FR}, A_{RR} bezeichnet. Die Ecken der Umgebungsobjekt-Kontur sind mit B_{L}, C_{L}, B_{R}, C_{R} bezeichnet. Um festzustellen, ob das Fahrzeug 1 kollisionsfrei zu dem Umgebungsobjekt U ist, können folgende Schritte vollzogen werden:
Zunächst wird geprüft, ob eine laterale Kollisionssituation vorliegt. Dazu wird für jede Ecke der Fahrzeugkarosseriekontur des Fahrzeugs 1 deren Lage relativ zu den Seitenkonturlinien B_{L}-C_{L} und B_{R}-C_{R} des Umgebungsobjekts U basierend auf dem vorbeschriebenen Rotationsrichtungsverfahren bestimmt. Dies bedeutet, dass für die Punkte-Triplets B_{L}-C_{L}-A_{FL}, B_{L}-C_{L}-A_{RL}, B_{L}-C_{L}-A_{FR} und B_{L}-C_{L}-A_{RR} sowie für die Punkte-Triplets B_{R}-C_{R}-A_{FL}, B_{R}-C_{R}-A_{RL}, B_{R}-C_{R}-A_{FR} und B_{R}-C_{R}-A_{RR} jeweils die Rotationsrichtung beim Durchlauf der durch diese Punkte aufgespannten Linienzüge bestimmt wird. Wenn die Durchläufe durch sämtliche Linienzüge nicht zu der gleichen Rotationsrichtung führen, liegt eine laterale Kollisionssituation mit dem Umgebungsobjekt vor.

Anschließend wird geprüft, ob eine longitudiale Kollisionssituation vorliegt. Dazu wird für jede Ecke der Fahrzeugkarosseriekontur des Fahrzeugs 1 deren Lage relativ zu der vorderen und hinteren Konturlinien C_{L}-C_{R} und B_{L}-B_{R} des Umgebungsobjekts U basierend auf dem vorbeschriebenen Rotationsrichtungsverfahren bestimmt. Dies bedeutet, dass für die Punkte-Triplets C_{L}-C_{R}-A_{FL}, C_{L}-C_{R}-A_{RL}, C_{L}-C_{R}-A_{FR} und C_{L}-C_{R}-A_{RR} sowie für die Punkte-Triplets B_{L}-B_{R}-A_{FL}, B_{L}-B_{R}-A_{RL}, B_{L}-B_{R}-A_{FR} und B_{L}-B_{R}-A_{RR} jeweils die Rotationsrichtung beim Durchlauf der durch diese Punkte aufgespannten Linienzüge bestimmt wird. Wenn die Durchläufe durch sämtliche Linienzüge nicht zu der gleichen Rotationsrichtung führen, liegt eine longitudinale Kollisionssituation mit dem Umgebungsobjekt vor.

Wenn durch die vorbeschriebenen Verfahrensschritte festgestellt wird, dass weder eine laterale noch eine longitudinale Kollisionssituation vorliegt, kann das Fahrzeug 1 in Bezug auf dieses geprüfte Umgebungsobjekt kollisionsfrei entlang der Trajektorie bewegt werden.

Wenn, wie in Fig. 5 gezeigt, eine Vielzahl von Umgebungsobjekten U entlang der Trajektorie T angeordnet sind, muss das vorbeschriebene Verfahren iterativ angewendet werden, um die Kollisionsfreiheit gegenüber sämtlichen Umgebungsobjekten entlang der Trajektorie des Fahrzeugs 1 zu gewährleisten.

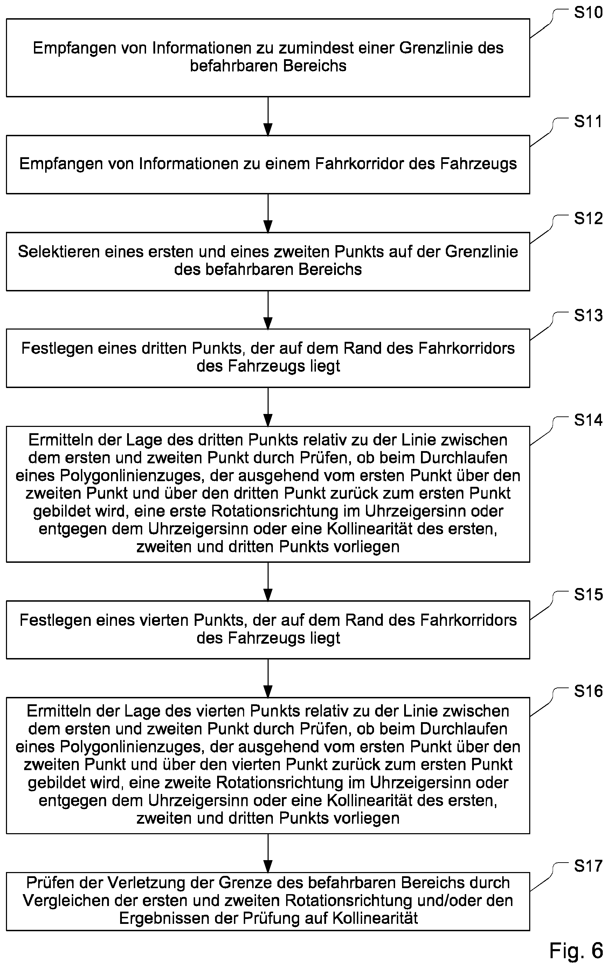

Fig. 6 zeigt ein Blockdiagramm, das die Schritte des Verfahrens zur Prüfung einer Verletzung einer Grenze des befahrbaren Bereichs durch ein Fahrzeug, das sich entlang einer Trajektorie bewegt, veranschaulicht.

Zunächst werden Informationen zu zumindest einer Grenzlinie des befahrbaren Bereichs empfangen (S10). Die Grenzlinie kann dabei eine Grenzlinie im Freiraum sein oder sich auf ein Umgebungsobjekt beziehen.

Zudem werden Informationen zu einem Fahrkorridor des Fahrzeugs empfangen, wobei der Fahrkorridor der Bereich ist, der beim Durchfahren der Trajektorie durch eine Projektion der Fahrzeugkarosseriekontur auf die Fahrbahn überstrichen wird (S11). Dieser Fahrkorridor muss im befahrbaren Bereich liegen bzw. muss kollisionsfrei sein, um eine Kollision des Fahrzeugs mit Umgebungsobjekten zu vermeiden.

Anschließend wird ein erster und ein zweiter Punkt auf der Grenzlinie des befahrbaren Bereichs selektiert, wobei der erste Punkt in Fahrtrichtung des Fahrzeugs hinter dem zweiten Punkt liegt (S12).

Zudem wird ein dritter Punkt festgelegt, der auf dem Rand des Fahrkorridors des Fahrzeugs liegt (S13). Dieser dritte Punkt ist insbesondere ein Punkt auf der Fahrzeugkarosseriekontur des Fahrzeugs, der beispielsweise eine Ecke der Fahrzeugkarosseriekontur definiert.

Daraufhin wird die Lage des dritten Punkts relativ zu der Linie zwischen dem ersten und zweiten Punkt ermittelt, indem geprüft wird, ob beim Durchlaufen eines Linienzuges, der ausgehend vom ersten Punkt über den zweiten Punkt zum dritten Punkt gebildet wird, eine erste Rotationsrichtung im Uhrzeigersinn oder entgegen dem Uhrzeigersinn oder eine Kollinearität des ersten, zweiten und dritten Punkts vorliegen (S14).

Zudem wird zumindest ein vierter Punkt festgelegt, der auf dem Rand des Fahrkorridors des Fahrzeugs liegt und von dem dritten Punkt verschieden ist (S15). Dieser vierte Punkt ist insbesondere ein Punkt auf der Fahrzeugkarosseriekontur des Fahrzeugs, der beispielsweise eine weitere Ecke der Fahrzeugkarosseriekontur definiert.

Daraufhin wird die Lage des vierten Punkts relativ zu der Linie zwischen dem ersten und zweiten Punkt ermittelt, indem geprüft wird, ob beim Durchlaufen eines Polygonlinienzuges, der ausgehend vom ersten Punkt über den zweiten Punkt zum vierten Punkt gebildet wird, eine zweite Rotationsrichtung im Uhrzeigersinn oder entgegen dem Uhrzeigersinn oder eine Kollinearität des ersten, zweiten und dritten Punkts vorliegen (S16).

Zuletzt wird durch Vergleichen der ersten und zweiten Rotationsrichtung und den Ergebnissen der Prüfung auf Kollinearität geprüft, ob eine Verletzung der Grenze des befahrbaren Bereichs vorliegt (S17).

Die Erfindung wurde voranstehend an Ausführungsbeispielen beschrieben. Es versteht sich, dass zahlreiche Änderungen sowie Abwandlungen möglich sind, ohne dass dadurch der durch die Patentansprüche definierte Schutzbereich verlassen wird.

## Patentansprüche

1. Computerimplementiertes Verfahren zur Prüfung der Verletzung einer Grenze eines befahrbaren Bereichs durch ein Fahrzeug (1), das sich entlang einer Trajektorie (T) bewegt, wobei das Verfahren die folgenden Schritte umfasst:
a) Empfangen von Informationen zu zumindest einer Grenzlinie (G1, G2) des befahrbaren Bereichs (S10);
b) Empfangen von Informationen zu einem Fahrkorridor des Fahrzeugs (1), wobei der Fahrkorridor der Bereich ist, der beim Durchfahren der Trajektorie (T) durch eine Projektion der Fahrzeugkarosseriekontur (F) auf die Fahrbahn überstrichen wird (S11);
**dadurch gekennzeichnet, dass**
das Verfahren ferner folgende Schritte umfasst:
c) Selektieren eines ersten und eines zweiten Punkts (B, C) auf der Grenzlinie (G1) des befahrbaren Bereichs, wobei der erste Punkt (B) in Fahrtrichtung (FR) des Fahrzeugs (1) hinter dem zweiten Punkt (C) liegt (S12);
d) Festlegen eines dritten Punkts (A_{FL}), der auf dem Rand des Fahrkorridors des Fahrzeugs (1) liegt (S13);
e) Ermitteln der Lage des dritten Punkts (A_{FL}) relativ zu der Linie zwischen dem ersten und zweiten Punkt (B, C) durch Prüfen, ob beim Durchlaufen eines Linienzuges, der ausgehend vom ersten Punkt (B) über den zweiten Punkt (C) zum dritten Punkt (A_{FL}) gebildet wird, eine erste Rotationsrichtung im Uhrzeigersinn oder entgegen dem Uhrzeigersinn oder eine Kollinearität des ersten, zweiten und dritten Punkts (A_{FL}, B, C) vorliegen (S14);
f) Festlegen zumindest eines vierten Punkts (A_{RL}), der auf dem Rand des Fahrkorridors des Fahrzeugs (1) liegt und von dem dritten Punkt (A_{FL}) verschieden ist (S15);
g) Ermitteln der Lage des vierten Punkts (A_{RL}) relativ zu der Linie zwischen dem ersten und zweiten Punkt (B, C) durch Prüfen, ob beim Durchlaufen eines Linienzuges, der ausgehend vom ersten Punkt (B) über den zweiten Punkt (C) zum vierten Punkt (A_{RL}) gebildet wird, eine zweite Rotationsrichtung im Uhrzeigersinn oder entgegen dem Uhrzeigersinn oder eine Kollinearität des ersten, zweiten und vierten Punkts (A_{RL}, B, C) vorliegen (S16);
h) Prüfen der Verletzung der Grenze des befahrbaren Bereichs durch Vergleichen der ersten und zweiten Rotationsrichtung und den Ergebnissen der Prüfung auf Kollinearität (S17).

2. Verfahren nach Anspruch 1, **dadurch gekennzeichnet, dass** der dritte und vierte Punkt (A_{FL}, A_{RL}) jeweils ein Eckpunkt eines Polygons ist, das die Fahrzeugkarosseriekontur nachbildet, wobei der dritte und vierte Punkt (A_{FL}, A_{RL}) sich auf eine gemeinsame Seitenlinie der Fahrzeugkarosseriekontur beziehen und jeweils Eckpunkte der rechten oder linken Seitenlinie der Fahrzeugkarosseriekontur sind.

3. Verfahren nach Anspruch 1 oder 2, **dadurch gekennzeichnet, dass** beim Prüfen der Verletzung der Grenze des befahrbaren Bereichs ermittelt wird, ob die erste und zweite Rotationsrichtung gleich oder unterschiedlich sind.

4. Verfahren nach einem der vorhergehenden Ansprüche, **dadurch gekennzeichnet, dass** die zumindest eine Grenzlinie (G1, G2) des befahrbaren Bereichs durch mehrere zueinander beabstandete Punkte approximiert wird und dass Punktepaare der Grenzlinie zeitlich nacheinander als erste und zweite Punkte (B, C) ausgewählt und für die Ermittlung der ersten und zweiten Rotationsrichtung und die Prüfung, ob eine Verletzung der Grenze des befahrbaren Bereichs vorliegt, verwendet werden.

5. Verfahren nach einem der vorhergehenden Ansprüche, **dadurch gekennzeichnet, dass** der befahrbare Bereich eine linke und eine rechte Grenzlinie (G1, G2) aufweist, die zueinander beabstandet sind und eine Fahrspur definieren, dass die Fahrzeugkarosseriekontur durch ein Rechteck mit einem Paar von linken Ecken und einem Paar von rechten Ecken approximiert wird und dass für das Paar von linken Ecken eine erste und zweite Rotationsrichtung ermittelt wird und basierend auf der ersten und zweiten Rotationsrichtung geprüft wird, ob das Fahrzeug (1) die linke Grenzlinie (G1) des befahrbaren Bereichs verletzt.

6. Verfahren nach einem der vorhergehenden Ansprüche, **dadurch gekennzeichnet, dass** der befahrbare Bereich eine linke und eine rechte Grenzlinie (G1, G2) aufweist, die zueinander beabstandet sind und eine Fahrspur definieren, dass die Fahrzeugkarosseriekontur durch ein Rechteck mit einem Paar von linken Ecken und einem Paar von rechten Ecken approximiert wird und dass für das Paar von rechten Ecken eine erste und zweite Rotationsrichtung ermittelt wird und basierend auf der ersten und zweiten Rotationsrichtung geprüft wird, ob das Fahrzeug (1) die rechte Grenzlinie (G2) des befahrbaren Bereichs verletzt.

7. Verfahren nach einem der vorhergehenden Ansprüche, **dadurch gekennzeichnet, dass** der befahrbare Bereich eine linke und eine rechte Grenzlinie (G1, G2) aufweist, die zueinander beabstandet sind und eine Fahrspur definieren, dass die Fahrzeugkarosseriekontur durch ein Rechteck mit zwei linken und zwei rechten Ecken approximiert wird und dass zumindest zeitweise die Lage zumindest der beiden linken Ecken relativ zur Linie zwischen dem ersten und zweiten Punkt, die auf der linken Grenzlinie (G1) liegen, geprüft wird, dass zumindest für die beiden linken Ecken jeweils eine Rotationsrichtungsbestimmung durchgeführt wird, und zwar indem für jede linke Ecke beim Durchlaufen eines Linienzuges, der ausgehend vom ersten Punkt über den zweiten Punkt zur jeweiligen Ecke gebildet wird, eine Rotationsrichtung bestimmt wird und dass geprüft, wird, ob die beiden Rotationsrichtungen im Uhrzeigersinn orientiert sind.

8. Verfahren nach einem der vorhergehenden Ansprüche, **dadurch gekennzeichnet, dass** der befahrbare Bereich eine linke und eine rechte Grenzlinie (G1, G2) aufweist, die zueinander beabstandet sind und eine Fahrspur definieren, dass die Fahrzeugkarosseriekontur durch ein Rechteck mit zwei linken und zwei rechten Ecken approximiert wird und dass zumindest zeitweise die Lage der beiden rechten Ecken relativ zur Linie zwischen dem ersten und zweiten Punkt, die auf der rechten Grenzlinie (G2) liegen, geprüft wird, dass für beide rechte Ecken jeweils eine Rotationsrichtungsbestimmung durchgeführt wird, und zwar indem für jede rechte Ecke beim Durchlaufen eines Linienzuges, der ausgehend vom ersten Punkt über den zweiten Punkt zur jeweiligen Ecke gebildet wird, eine Rotationsrichtung bestimmt wird und dass geprüft, wird, ob die beiden Rotationsrichtungen gegen den Uhrzeigersinn orientiert sind.

9. Verfahren nach einem der Ansprüche 1 bis 4, **dadurch gekennzeichnet, dass** die Grenzlinie des befahrbaren Bereichs sich auf eine Grenzlinie eines örtlich begrenztes Umgebungsobjekt (U) im Umgebungsbereich des Fahrzeugs (1) bezieht, wobei das Umgebungsobjekt (U) durch einen Begrenzungsrahmen beschrieben wird und dass der erste und zweite Punkt (B, C) eine Linie des Begrenzungsrahmens definiert, die sich auf eine dem Fahrzeug (1) zugewandte Seite des Umgebungsobjekts (U) bezieht.

10. Verfahren nach Anspruch 9, **dadurch gekennzeichnet, dass** die Fahrzeugkarosseriekontur durch ein Rechteck mit vier Ecken approximiert wird, dass das Umgebungsobjekt (U) durch einen rechteckförmigen Begrenzungsrahmen mit vier Ecken approximiert wird, dass für jede Linie des rechteckförmigen Begrenzungsrahmens jeweils die Lage sämtlicher Ecken des Rechtecks der Fahrzeugkarosseriekontur relativ zu der jeweiligen Linie bestimmt wird und zwar jeweils durch Bestimmen der Rotationsrichtung beim Durchlaufen des Linienzugs zwischen den Endpunkten der jeweiligen Linie des rechteckförmigen Begrenzungsrahmens und der jeweiligen Ecke des Rechtecks der Fahrzeugkarosseriekontur und dass nach dem Bestimmen der Rotationsrichtungen geprüft wird, ob alle Rotationsrichtungen gleich sind.

11. Fahrerassistenzsystem, das zur Prüfung der Verletzung einer Grenze eines befahrbaren Bereichs durch ein Fahrzeug (1) ausgebildet ist, wobei das Fahrerassistenzsystem mehrere um ein Fahrzeug (1) herum verteilt angeordnete Sensoren (2) und eine Recheneinheit (3) zur Verarbeitung der von den Sensoren (2) bereitgestellten Informationen umfasst, wobei die Recheneinheit (3) dazu konfiguriert ist, die folgenden Schritte zu vollziehen:
a) Empfangen von Informationen zu zumindest einer Grenzlinie des befahrbaren Bereichs;
b) Empfangen von Informationen zu einem Fahrkorridor des Fahrzeugs (1), wobei der Fahrkorridor der Bereich ist, der beim Durchfahren der Trajektorie durch eine Projektion der Fahrzeugkarosseriekontur auf die Fahrbahn überstrichen wird;
**dadurch gekennzeichnet, dass**
das Fahrerassistenzsystem ferner dazu konfiguriert ist, folgende Schritte zu vollziehen:
c) Selektieren eines ersten und eines zweiten Punkts (B, C) auf der Grenzlinie des befahrbaren Bereichs, wobei der erste Punkt (B) in Fahrtrichtung des Fahrzeugs (1) hinter dem zweiten Punkt (C) liegt;
d) Festlegen eines dritten Punkts (A_{FL}), der auf dem Rand des Fahrkorridors des Fahrzeugs (1) liegt;
e) Ermitteln der Lage des dritten Punkts (A_{FL}) relativ zu der Linie zwischen dem ersten und zweiten Punkt (B, C) durch Prüfen, ob beim Durchlaufen eines Linienzuges, der ausgehend vom ersten Punkt (B) über den zweiten Punkt (C) zum dritten Punkt (A_{FL}) gebildet wird, eine erste Rotationsrichtung im Uhrzeigersinn oder entgegen dem Uhrzeigersinn oder eine Kollinearität des ersten, zweiten und dritten Punkts (A_{FL}, B, C) vorliegen;
f) Festlegen zumindest eines vierten Punkts (A_{RL}), der auf dem Rand des Fahrkorridors des Fahrzeugs (1) liegt und von dem dritten Punkt (A_{FL}) verschieden ist;
g) Ermitteln der Lage des vierten Punkts (A_{RL}) relativ zu der Linie zwischen dem ersten und zweiten Punkt (B, C) durch Prüfen, ob beim Durchlaufen eines Linienzuges, der ausgehend vom ersten Punkt (B) über den zweiten Punkt (C) zum vierten Punkt (A_{RL}) gebildet wird, eine zweite Rotationsrichtung im Uhrzeigersinn oder entgegen dem Uhrzeigersinn oder eine Kollinearität des ersten, zweiten und vierten Punkts (A_{RL}, B, C) vorliegen;
h) Prüfen der Verletzung der Grenze des befahrbaren Bereichs durch Vergleichen der ersten und zweiten Rotationsrichtung und den Ergebnissen der Prüfung auf Kollinearität.

## Claims

1. A computer-implemented method for monitoring whether a vehicle (1) moving along a trajectory (T) has crossed a boundary of a drivable area, wherein the method comprises the following steps:
a) receiving information on at least one boundary line (G1, G2) of the drivable area (S10);
b) receiving information on a driving corridor of the vehicle (1), wherein the driving corridor is the area covered by a projection of the vehicle body contour (F) onto the roadway when driving along the trajectory (T) (S11);
**characterised in that**
the method further comprises the following steps:
c) selecting a first and a second point (B, C) on the boundary line (G1) of the drivable area, wherein the first point (B) lies behind the second point (C) in the direction of travel (FR) of the vehicle (1) (S12);
d) identifying a third point (A_{FL}) lying on the edge of the driving corridor of the vehicle (1) (S13);
e) ascertaining the location of the third point (A_{FL}) relative to the line between the first and second points (B, C) by monitoring whether a clockwise or anticlockwise first direction of rotation or collinearity of the first, second and third points (A_{FL}, B, C) is present when traversing a polyline formed from the first point (B) to the third point (A_{FL}) going via the second point (C) (S14);
f) identifying at least one fourth point (A_{RL}) lying on the edge of the driving corridor of the vehicle (1) and different from the third point (A_{FL}) (S15);
g) ascertaining the location of the fourth point (A_{RL}) relative to the line between the first and second points (B, C) by monitoring whether a clockwise or anticlockwise second direction of rotation or collinearity of the first, second and fourth points (A_{RL}, B, C) is present when traversing a polyline formed from the first point (B) to the fourth point (A_{RL}) going via the second point (C) (S16);
h) monitoring whether the boundary of the drivable area has been crossed by comparing the first and second directions of rotation and the results of monitoring for collinearity (S17).

2. The method as claimed in claim 1, **characterised in that** the third and fourth points (A_{FL}, A_{RL}) are each a vertex of a polygon replicating the vehicle body contour, wherein the third and fourth points (A_{FL}, A_{RL}) relate to a common sideline of the vehicle body contour and are each vertices of the right or left sideline of the vehicle body contour.

3. The method as claimed in claim 1 or 2, **characterised in that**, when monitoring whether the boundary of the drivable area has been crossed, it is ascertained whether the first and second directions of rotation are the same or different.

4. The method as claimed in one of the preceding claims, **characterised in that** the at least one boundary line (G1, G2) of the drivable area is approximated by multiple points spaced apart from one another, and **in that** pairs of points of the boundary line are chosen at successive times as first and second points (B, C) and are used to ascertain the first and second directions of rotation and to monitor whether the boundary of the drivable area has been crossed.

5. The method as claimed in one of the preceding claims, **characterised in that** the drivable area has a left and a right boundary line (G1, G2) that are spaced apart from one another and define a lane, **in that** the vehicle body contour is approximated by a rectangle having a pair of left corners and a pair of right corners, and **in that** first and second directions of rotation are ascertained for the pair of left corners and, based on the first and second directions of rotation, it is monitored whether the vehicle (1) has crossed the left boundary line (G1) of the drivable area.

6. The method as claimed in one of the preceding claims, **characterised in that** the drivable area has a left and a right boundary line (G1, G2) that are spaced apart from one another and define a lane, **in that** the vehicle body contour is approximated by a rectangle having a pair of left corners and a pair of right corners, and **in that** first and second directions of rotation are ascertained for the pair of right corners and, based on the first and second directions of rotation, it is monitored whether the vehicle (1) has crossed the right boundary line (G2) of the drivable area.

7. The method as claimed in one of the preceding claims, **characterised in that** the drivable area has a left and a right boundary line (G1, G2) that are spaced apart from one another and define a lane, **in that** the vehicle body contour is approximated by a rectangle having two left and two right corners, and **in that** the location of at least the two left corners relative to the line between the first and second points lying on the left boundary line (G1) is monitored at least intermittently, **in that** a direction of rotation is determined at least for each of the two left corners by determining a direction of rotation for each left corner when traversing a polyline formed from the first point to the respective corner going via the second point, and **in that** it is monitored whether the two directions of rotation are oriented clockwise.

8. The method as claimed in one of the preceding claims, **characterised in that** the drivable area has a left and a right boundary line (G1, G2) that are spaced apart from one another and define a lane, **in that** the vehicle body contour is approximated by a rectangle having two left and two right corners, and **in that** the location of the two right corners relative to the line between the first and second points lying on the right boundary line (G2) is monitored at least intermittently, **in that** a direction of rotation is determined for each of the two right corners by determining a direction of rotation for each right corner when traversing a polyline formed from the first point to the respective corner going via the second point, and **in that** it is monitored whether the two directions of rotation are oriented anticlockwise.

9. The method as claimed in one of claims 1 to 4, **characterised in that** the boundary line of the drivable area relates to a boundary line of a localised surrounding object (U) in the surrounding area of the vehicle (1), wherein the surrounding object (U) is described by a bounding box, and **in that** the first and second points (B, C) define a line of the bounding box that relates to a side of the surrounding object (U) that faces the vehicle (1).

10. The method as claimed in claim 9, **characterised in that** the vehicle body contour is approximated by a rectangle having four corners, **in that** the surrounding object (U) is approximated by a rectangular bounding box having four corners, **in that**, for each line of the rectangular bounding box, in each case the location of all of the corners of the rectangle of the vehicle body contour relative to the respective line is determined by in each case determining the direction of rotation when traversing the polyline between the end points of the respective line of the rectangular bounding box and the respective corner of the rectangle of the vehicle body contour, and **in that**, after the directions of rotation have been determined, it is monitored whether all of the directions of rotation are the same.

11. A driver assistance system designed to monitor whether a vehicle (1) has crossed a boundary of a drivable area, wherein the driver assistance system comprises multiple sensors (2) arranged distributed around a vehicle (1) and a computing unit (3) for processing the information provided by the sensors (2), wherein the computing unit (3) is configured to perform the following steps:
a) receiving information on at least one boundary line of the drivable area;
b) receiving information on a driving corridor of the vehicle (1), wherein the driving corridor is the area covered by a projection of the vehicle body contour onto the roadway when driving along the trajectory;
**characterised in that**
the driver assistance system is further configured to perform the following steps:
c) selecting a first and a second point (B, C) on the boundary line of the drivable area, wherein the first point (B) lies behind the second point (C) in the direction of travel of the vehicle (1);
d) identifying a third point (A_{FL}) lying on the edge of the driving corridor of the vehicle (1);
e) ascertaining the location of the third point (A_{FL}) relative to the line between the first and second points (B, C) by monitoring whether a clockwise or anticlockwise first direction of rotation or collinearity of the first, second and third points (A_{FL}, B, C) is present when traversing a polyline formed from the first point (B) to the third point (A_{FL}) going via the second point (C);
f) identifying at least one fourth point (A_{RL}) lying on the edge of the driving corridor of the vehicle (1) and different from the third point (A_{FL});
g) ascertaining the location of the fourth point (A_{RL}) relative to the line between the first and second points (B, C) by monitoring whether a clockwise or anticlockwise second direction of rotation or collinearity of the first, second and fourth points (A_{RL}, B, C) is present when traversing a polyline formed from the first point (B) to the fourth point (A_{RL}) going via the second point (C);
h) monitoring whether the boundary of the drivable area has been crossed by comparing the first and second directions of rotation and the results of monitoring for collinearity.

## Revendications

1. Procédé mis en œuvre par ordinateur pour vérifier si un véhicule (1) se déplaçant le long d'une trajectoire (T) a franchi la limite d'une zone de circulation, dans lequel le procédé comprend les étapes suivantes :
a) la réception d'informations sur au moins une ligne de délimitation (G1, G2) de la zone de circulation (S10) ;
b) la réception d'informations sur un couloir de circulation du véhicule (1), dans lequel le couloir de circulation est la zone balayée par une projection du contour de la carrosserie du véhicule (F) sur la chaussée lors du parcours de la trajectoire (T) (S11) ;
**caractérisé en ce que**
le procédé comprend en outre les étapes suivantes :
c) la sélection d'un premier et d'un deuxième point (B, C) sur la ligne de délimitation (G1) de la zone de circulation, dans lequel le premier point (B) se situe derrière le deuxième point (C) dans le sens de déplacement (FR) du véhicule (1) (S12) ;
d) l'identification d'un troisième point (A_{FL}), qui se situe sur le bord du couloir de circulation du véhicule (1) (S13) ;
e) la détermination de la position du troisième point (A_{FL}) par rapport à la ligne entre les premier et deuxième points (B, C) en vérifiant si, lors du parcours d'une polyligne formée à partir du premier point (B) en passant par le deuxième point (C) jusqu'au troisième point (A_{FL}), il existe un premier sens de rotation dans le sens des aiguilles d'une montre ou dans le sens inverse des aiguilles d'une montre ou une colinéarité des premier, deuxième et troisième points (A_{FL}, B, C) (S14) ;
f) l'identification d'au moins un quatrième point (A_{RL}), qui se situe sur le bord du couloir de conduite du véhicule (1) et qui est différent du troisième point (A_{FL}) (S15) ;
g) la détermination de la position du quatrième point (A_{RL}) par rapport à la ligne entre les premier et deuxième points (B, C) en vérifiant si, lors du parcours d'une polyligne formée à partir du premier point (B) en passant par le deuxième point (C) jusqu'au quatrième point (A_{RL}), il existe un second sens de rotation dans le sens des aiguilles d'une montre ou dans le sens inverse des aiguilles d'une montre ou une colinéarité des premier, deuxième et quatrième points (A_{RL}, B, C) (S16) ;
h) la vérification du franchissement de la limite de la zone de circulation en comparant les premier et second sens de rotation et les résultats de la vérification de la colinéarité (S17).

2. Procédé selon la revendication 1, **caractérisé en ce que** les troisième et quatrième points (A_{FL}, A_{RL}) sont chacun un sommet d'un polygone qui reproduit le contour de la carrosserie du véhicule, dans lequel les troisième et quatrième points (A_{FL}, A_{RL}) se réfèrent à une ligne latérale commune du contour de la carrosserie du véhicule et sont chacun des sommets de la ligne latérale droite ou gauche du contour de la carrosserie du véhicule.

3. Procédé selon la revendication 1 ou 2, **caractérisé en ce que**, lors de la vérification du franchissement de la limite de la zone de circulation, il est déterminé si les premier et second sens de rotation sont identiques ou différents.

4. Procédé selon l'une des revendications précédentes, **caractérisé en ce que** l'au moins une ligne de délimitation (G1, G2) de la zone de circulation est approximée par plusieurs points espacés les uns des autres et que des paires de points de la ligne de délimitation sont sélectionnées successivement comme premier et deuxième points (B, C) et utilisées pour déterminer le sens de rotation et vérifier s'il existe un franchissement de la limite de la zone de circulation.

5. Procédé selon l'une des revendications précédentes, **caractérisé en ce que** la zone de circulation présente une ligne de délimitation gauche et une ligne de délimitation droite (G1, G2) espacées l'une de l'autre et définissant une voie de conduite, que le contour de la carrosserie du véhicule est approximé par un rectangle avec une paire de coins gauches et une paire de coins droits, et qu'un premier et un second sens de rotation sont déterminés pour la paire de coins gauches, et sur la base du premier et du second sens de rotation, il est vérifié si le véhicule (1) franchit la ligne de délimitation gauche (G1) de la zone de circulation.

6. Procédé selon l'une des revendications précédentes, **caractérisé en ce que** la zone de circulation présente une ligne de délimitation gauche et une ligne de délimitation droite (G1, G2) espacées l'une de l'autre et définissant une voie de conduite, que le contour de la carrosserie du véhicule est approximé par un rectangle avec une paire de coins gauches et une paire de coins droits, et qu'un premier et un second sens de rotation sont déterminés pour la paire de coins droits, et sur la base du premier et du second sens de rotation, il est vérifié si le véhicule (1) franchit la ligne de délimitation droite (G2) de la zone de circulation.

7. Procédé selon l'une des revendications précédentes, **caractérisé en ce que** la zone de circulation présente une ligne de délimitation gauche et une ligne de délimitation droite (G1, G2) espacées l'une de l'autre et définissant une voie de conduite, que le contour de la carrosserie du véhicule est approximé par un rectangle avec deux coins gauches et deux coins droits, et que la position d'au moins les deux coins gauches par rapport à la ligne entre les premier et deuxième points, situés sur la ligne de délimitation gauche (G1), est vérifiée au moins temporairement, que, au moins pour les deux coins gauches, une détermination du sens de rotation est respectivement effectuée, et ce en déterminant le sens de rotation de chaque coin gauche lors du parcours d'une polyligne formée à partir du premier point en passant par le deuxième point jusqu'au coin respectif, et qu'il est vérifié si les deux sens de rotation sont orientés dans le sens des aiguilles d'une montre.

8. Procédé selon l'une quelconque des revendications précédentes, **caractérisé en ce que** la zone de circulation présente une ligne de délimitation gauche et une ligne de délimitation droite (G1, G2) espacées l'une de l'autre et définissant une voie de conduite, **en ce que** le contour de la carrosserie du véhicule est approximé par un rectangle avec deux coins gauches et deux coins droits, et que la position des deux coins droits par rapport à la ligne entre les premier et deuxième points, situés sur la ligne de délimitation droite (G2), est vérifiée au moins temporairement, que, pour les deux coins droits, une détermination du sens de rotation est respectivement effectuée, et ce en déterminant le sens de rotation pour chaque coin droit lors du parcours d'une polyligne formée à partir du premier point en passant par le deuxième point jusqu'au coin respectif, et qu'il est vérifié si les deux sens de rotation sont orientés dans le sens inverse des aiguilles d'une montre.

9. Procédé selon l'une des revendications 1 à 4, **caractérisé en ce que** la ligne de délimitation de la zone de circulation fait référence à une ligne de délimitation d'un objet environnant localement limité (U) dans la zone environnante du véhicule (1), dans lequel l'objet environnant (U) est décrit par un cadre de limite et que les premier et deuxième points (B, C) définissent une ligne du cadre de limite qui fait référence à un côté de l'objet environnant (U) faisant face au véhicule (1).

10. Procédé selon la revendication 9, **caractérisé en ce que** le contour de la carrosserie du véhicule est approximé par un rectangle à quatre coins, que l'objet environnant (U) est approximé par un cadre de limite rectangulaire à quatre coins, que pour chaque ligne du cadre de limite rectangulaire, la position de tous les coins du rectangle du contour de la carrosserie du véhicule par rapport à la ligne respective est respectivement déterminée, et ce respectivement par la détermination du sens de rotation lors du parcours de la polyligne entre les extrémités de la ligne respective du cadre de limite rectangulaire et le coin respectif du rectangle du contour de la carrosserie du véhicule, et qu'après avoir déterminé les sens de rotation, il est vérifié si tous les sens de rotation sont identiques.

11. Système d'aide à la conduite conçu pour vérifier si un véhicule (1) a franchi la limite d'une zone de circulation, dans lequel le système d'aide à la conduite comprend plusieurs capteurs (2) répartis autour d'un véhicule (1) et une unité de calcul (3) pour traiter les informations fournies par les capteurs (2), dans lequel l'unité de calcul (3) est configurée pour effectuer les étapes suivantes :
a) la réception d'informations sur au moins une ligne de délimitation de la zone de circulation ;
b) la réception d'informations sur un couloir de circulation d'un véhicule (1), dans lequel le couloir de circulation est la zone balayée par une projection du contour de la carrosserie du véhicule sur la chaussée lors du parcours de la trajectoire ;
**caractérisé en ce que**
le système d'aide à la conduite est en outre configuré pour effectuer les étapes suivantes :
c) la sélection d'un premier et d'un deuxième point (B, C) sur la ligne de délimitation de la zone de circulation, dans lequel le premier point (B) se situe derrière le deuxième point (C) dans le sens de déplacement du véhicule (1) ;
d) l'identification d'un troisième point (A_{FL}), qui se situe sur le bord du couloir de circulation du véhicule (1) ;
e) la détermination de la position du troisième point (A_{FL}) par rapport à la ligne entre les premier et deuxième points (B, C) en vérifiant si, lors du parcours d'une polyligne formée à partir du premier point (B) en passant par le deuxième point (C) jusqu'au troisième point (A_{FL}), il existe un premier sens de rotation dans le sens des aiguilles d'une montre ou dans le sens inverse des aiguilles d'une montre ou une colinéarité des premier, deuxième et troisième points (A_{FL}, B, C) ;
f) l'identification d'au moins un quatrième point (A_{RL}), qui se trouve sur le bord du couloir de conduite du véhicule (1) et qui est différent du troisième point (A_{FL}) ;
g) la détermination de la position du quatrième point (A_{RL}) par rapport à la ligne entre les premier et deuxième points (B, C) en vérifiant si, lors du parcours d'une polyligne formée à partir du premier point (B) en passant par le deuxième point (C) jusqu'au quatrième point (A_{RL}), il existe un second sens de rotation dans le sens des aiguilles d'une montre ou dans le sens inverse des aiguilles d'une montre ou une colinéarité des premier, deuxième et quatrième points (A_{RL}, B, C) ;
h) la vérification du franchissement de la limite de la zone de circulation en comparant les premier et second sens de rotation et les résultats de la vérification de la colinéarité.
